# EUROPÄISCHE PATENTSCHRIFT

(11) **EP 3 009 243 B1**
(45) Veröffentlichungstag und Bekanntmachung des Hinweises auf die Patenterteilung: **28.07.2021**
(21) Anmeldenummer: 15002831.4
(22) Anmeldetag: 05.10.2015
(51) Int. Cl.: B27B 17/12

(54) **HANDGEFÜHRTE MOTORKETTENSÄGE MIT EINER SCHMIERVORRICHTUNG FÜR DIE SÄGEKETTE**
HAND HELD MOTOR CHAIN SAW COMPRISING A DEVICE FOR LUBRICATING THE SAW CHAIN
SCIE À CHAÎNE PORTATIVE MOTORISÉE AYANT UN DISPOSITIF DE LUBRIFICATION DE LA CHAÎNE DE SCIE

(30) Priorität: 15.10.2014 DE 102014015578
(43) Veröffentlichungstag der Anmeldung: 20.04.2016
(73) Patentinhaber: Andreas Stihl AG & Co. KG, 71336 Waiblingen (DE)
(72) Erfinder: Zimmermann, Helmut, D-73663 Berglen (DE); Karrar, Carel, D-70176 Stuttgart (DE); Frey, Benjamin, D-70191 Stuttgart (DE)
(74) Vertreter: Reinhardt, Annette

(56) Entgegenhaltungen:
- DE-A1-102009 034 710
- US-A- 5 839 335

## Beschreibung

Die Erfindung betrifft eine handgeführte Motorsäge der im Oberbegriff des Anspruchs 1 angegebenen Gattung.

Es ist bekannt, bei handgeführten Arbeitsgeräten wie beispielsweise Motorsägen Schmieröl zur Schmierung des Werkzeugs vorzusehen, das über eine Schmierölpumpe zum Werkzeug gefördert wird. Dies ist vergleichsweise aufwändig.

Aus der DE 10 2009 034 710 B4 ist eine Motorsäge bekannt, bei der ein festes Schmierstoffstück zur Schmierung des Werkzeugs eingesetzt wird. Das Schmierstoffstück wird gegen das Antriebsritzel der Sägekette der Motorsäge gedrückt. Es hat sich gezeigt, dass durch das Antriebsritzel ein hoher Schmierstoffabtrag erfolgen kann, der zu einem hohen Schmierstoffverbrauch führt, so dass das Schmierstoffstück häufig ersetzt werden muss. Dies führt zu häufigen Arbeitsunterbrechungen. Auch die Schmierwirkung ist nicht immer ausreichend.

Der Erfindung liegt die Aufgabe zugrunde, eine handgeführte Motorsäge der gattungsgemäßen Art zu schaffen, deren Schmiervorrichtung einfach aufgebaut ist und eine gute und zuverlässige Schmierung bei geringem Schmierstoffverbrauch erzielt.

Diese Aufgabe wird durch eine handgeführte Motorsäge mit den Merkmalen des Anspruchs 1 gelöst.

Es ist vorgesehen, dass das Schmierstoffstück in eine Schmelzkammer ragt, die über mindestens einen Schmierstoffkanal mit der Sägekette verbunden ist. Die Schmelzkammer ist mindestens teilweise von einem Wärmeleitelement begrenzt, das im Betrieb der Motorsäge erhitzt wird. In der Schmelzkammer kann das Schmierstoffstück geschmolzen werden und über den Schmierstoffkanal gelangt der Schmierstoff zur Sägekette. Dadurch ist keine direkte Anlage des Schmierstoffstücks an der Sägekette notwendig. Dies vermeidet einen übermäßigen Schmierstoffverbrauch. Über den Schmierstoffkanal kann der Schmierstoff so zu der Sägekette geleitet werden, dass sich eine gute Schmierung der Sägekette im Betrieb ergibt. Das Wärmeleitelement wird vorteilhaft nur im Betrieb der Motorsäge erhitzt, so dass das Schmierstoffstück dann, wenn die Motorsäge nicht im Betrieb ist, auch im Bereich der Schmelzkammer erstarren kann. Dadurch ist ein Austreten von Schmierstoff auf einfache Weise vermieden.

Vorteilhaft steht das Wärmeleitelement mit mindestens einer Wärmequelle der Motorsäge in Verbindung. Die Wärmequelle ist insbesondere die Sägekette der Motorsäge. Im Betrieb erwärmt sich die Sägekette sehr schnell, so dass bereits nach kurzer Betriebszeit ausreichend Wärme zum Aufschmelzen des Schmierstoffstücks in der Schmelzkammer zur Verfügung steht. Dadurch kann auf einfache Weise bereits nach einer kurzen Anlaufphase eine ausreichende Schmierung der Sägekette sichergestellt werden. Dadurch, dass die Wärmequelle die Sägekette der Motorsäge ist, wird keine zusätzliche Wärmequelle benötigt.

Vorteilhaft wird das Schmierstoffstück von einer Vorspanneinrichtung in Richtung auf die Schmelzkammer gedrückt. Dadurch kann sichergestellt werden, dass immer ausreichend Schmierstoff in die Schmelzkammer nachgefördert wird. Die Vorspanneinrichtung ist insbesondere eine Feder. Dadurch ergibt sich ein einfacher Aufbau. Zusätzlich oder alternativ kann als Vorspanneinrichtung auch die Schwerkraft genutzt oder eine Hebelkinematik oder dgl. vorgesehen sein. Auch eine pneumatische Vorspanneinrichtung kann zweckmäßig sein. Das Schmierstoffstück tritt vorteilhaft durch eine Öffnung in die Schmelzkammer ein, wobei die Kontur der Öffnung an die Außenkontur des Schmierstoffstücks angepasst ist. Es kann vorgesehen sein, dass die Abdichtung des Schmierstoffstücks in der Öffnung durch den aufgeschmelzten Schmierstoff selbst erfolgt, der teilweise durch die Öffnung aus der Schmelzkammer austreten und dort erstarren kann. Dadurch ist auf einfache Weise ein selbstdichtendes System gebildet. Es kann jedoch auch vorgesehen sein, dass an der Öffnung eine Dichteinrichtung angeordnet ist, durch die das Schmierstoffstück in die Schmelzkammer eintritt. Die Dichteinrichtung ist insbesondere eine Dichtung. Die Dichtung kann scheibenförmig ausgebildet sein. Auch eine rohrförmige Gestaltung der Dichtung, bei der sich die Dichtung in Bewegungsrichtung des Schmierstoffstücks in die Schmelzkammer über mehrere Millimeter erstreckt, kann jedoch vorteilhaft sein. Die Dichtung kann insbesondere aus einem geschäumten Material bestehen.

Vorteilhaft weist die Motorsäge eine Halterung für das Schmierstoffstück auf, die an einem Gehäuse der Motorsäge abnehmbar gehalten ist. Zum Nachfüllen eines neuen Schmierstoffstücks kann die Halterung vom Gehäuse abgenommen und ein neues Schmierstoffstück an der Halterung eingesetzt werden. Dadurch ergibt sich eine einfache Bedienung. Vorteilhaft umfasst die Halterung einen rohrförmigen Grundkörper, der in einer Aufnahme des Gehäuses der Motorsäge angeordnet ist. Die Aufnahme ist insbesondere über einen Teil des Umfangs des Grundkörpers zur Umgebung hin offen. Dadurch kann der Bediener auf einfache Weise feststellen, wie groß das in der Halterung noch vorhandene Schmierstoffstück ist und ob das Einsetzen eines neuen Schmierstoffstücks bereits erforderlich ist.

Vorteilhaft umfasst die Halterung ein Druckstück, das an der der Schmelzkammer abgewandten Seite an dem Schmierstoffstück anliegt und das in Richtung auf die Schmelzkammer vorgespannt ist. Durch die Anordnung der Vorspanneinrichtung an der Halterung ergibt sich ein einfacher Aufbau. Die Vorspanneinrichtung wird insbesondere beim Einsetzen der Halterung in das Gehäuse und/oder beim Einsetzen eines Schmierstoffstücks in die Halterung gespannt. Die Halterung weist insbesondere einen Endanschlag für das Druckstück auf. Vorteilhaft legt der Endanschlag die Endlage des Druckstücks in Bewegungsrichtung des Schmierstoffstücks in die Schmelzkammer fest. Auch bei vollständig aufgebrauchtem Schmierstoffstück kann das Druckstück dadurch nicht aus der Halterung geschoben werden. Auch eine andere Anordnung des Endanschlags oder kein Endanschlag können vorteilhaft sein.

Das Werkzeug ist eine an einer Führungsschiene angeordnete Sägekette. Die Führungsschiene liegt dabei insbesondere an einem Seitenblech der Motorsäge an. Vorteilhaft bildet das Seitenblech das Wärmeleitelement. Dadurch, dass das üblicherweise ohnehin vorhandene Seitenblech als Wärmeleitelement genutzt wird, ergibt sich ein einfacher Aufbau. Für das Wärmeleitelement werden keine zusätzlichen Bauteile benötigt. Der Schmierstoffkanal wird vorteilhaft von dem Seitenblech und einem an dem Seitenblech anliegenden Zwischenblech begrenzt. Dadurch wird eine einfache Kanalführung realisiert. In dem Zwischenblech ist vorteilhaft eine den Schmierstoffkanal begrenzende Vertiefung vorgesehen, die sich bis zu einer Durchtrittsöffnung im Seitenblech erstreckt. Durch die Durchtrittsöffnung kann der Schmierstoff durch die im Seitenblech für flüssigen, von einer Ölpumpe geförderten Schmierstoff in die in der Führungsschiene vorgesehene Schmierstofföffnung zugeführt werden. Auch die Schmierstofföffnung und die Durchtrittsöffnung im Seitenblech bilden Abschnitte des Schmierstoffkanals, der den Schmierstoff von der Schmelzkammer bis zur Sägekette zuführt. Auch eine Gestaltung des Zwischenblechs ohne eine den Schmierstoffkanal begrenzende Vertiefung kann jedoch vorteilhaft sein.

Eine besonders vorteilhafte Anordnung ergibt sich, wenn das Schmierstoffstück so angeordnet ist, dass eine Längsmittelachse des Schmierstoffstücks etwa senkrecht zur Ebene der Führungsschiene verläuft. Dadurch ergibt sich ein kompakter Aufbau. Es kann jedoch auch vorgesehen sein, dass die Längsmittelachse schräg zur Ebene der Führungsschiene angeordnet ist. Dies kann insbesondere vorteilhaft sein, um den zur Verfügung stehenden Bauraum gut ausnutzen zu können. Auch ein gebogener Verlauf der Zuführung für das Schmierstoffstück kann vorgesehen sein, wenn einzelne, beispielsweise kugelförmige Schmierstoffstücke zum Einsatz kommen.

Es kann vorgesehen sein, dass das Wärmeleitelement von einer von dem Antriebsmotor betriebenen Heizeinrichtung erwärmt wird. Die Erwärmung von der Heizeinrichtung kann zusätzlich oder alternativ zur Erwärmung durch die Sägekette vorgesehen sein. Der Antriebsmotor ist insbesondere ein Verbrennungsmotor mit einem Abgasschalldämpfer. Das Wärmeleitelement kann zusätzlich oder alternativ auch von dem Abgasschalldämpfer und/oder aus dem Abgasschalldämpfer austretenden Abgasen erwärmt werden. Es kann vorteilhaft sein, mehrere Maßnahmen zur Erwärmung des Wärmeleitelements zu kombinieren.

Ausführungsbeispiele der Erfindung werden im Folgenden anhand der Zeichnung erläutert. Es zeigen:
- Fig. 1: eine schematische Seitenansicht einer Motorsäge,
- Fig. 2: eine Ansicht der Motorsäge in Richtung des Pfeils II in Fig. 1,
- Fig. 3: eine perspektivische Darstellung der Motorsäge,
- Fig. 4: einen Schnitt entlang der Linie IV-IV in Fig. 1,
- Fig. 5: eine Explosionsdarstellung der Schmiervorrichtung,
- Fig. 6: eine Explosionsdarstellung von Teilen der Schmiervorrichtung,
- Fig. 7: eine schematische, ausschnittsweise Darstellung der Führungsschiene der Motorsäge,
- Fig. 8: eine vergrößerte Darstellung des Bereichs der Schmelzkammer der Schmiervorrichtung aus Fig. 5,
- Fig. 9: eine vergrößerte Darstellung des Bereichs der Schmelzkammer des Schmierstoffstücks aus Fig. 4,
- Fig. 10: einen Schnitt durch ein Ausführungsbeispiel einer Motorsäge,
- Fig. 11: den Bereich XI aus Fig. 10 in vergrößerter Darstellung,
- Fig. 12: eine Explosionsdarstellung des Bereichs der Schmelzkammer der Schmiervorrichtung aus Fig. 11,
- Fig. 13: eine ausschnittsweise Schnittdarstellung eines Ausführungsbeispiels einer Schmiervorrichtung einer Motorsäge,
- Fig. 14: eine Explosionsdarstellung der Schmiervorrichtung aus Fig. 13,
- Fig. 15: eine vergrößerte ausschnittsweise Darstellung des Bereichs der Schmelzkammer der Schmiervorrichtung aus Fig. 13,
- Fig. 16: eine Explosionsdarstellung eines Ausführungsbeispiels einer Schmiervorrichtung,
- Fig. 17 und Fig. 18: Explosionsdarstellungen eines weiteren Ausführungsbeispiels einer Schmiervorrichtung,
- Fig. 19: eine Explosionsdarstellung eines weiteren Ausführungsbeispiels einer Schmiervorrichtung.

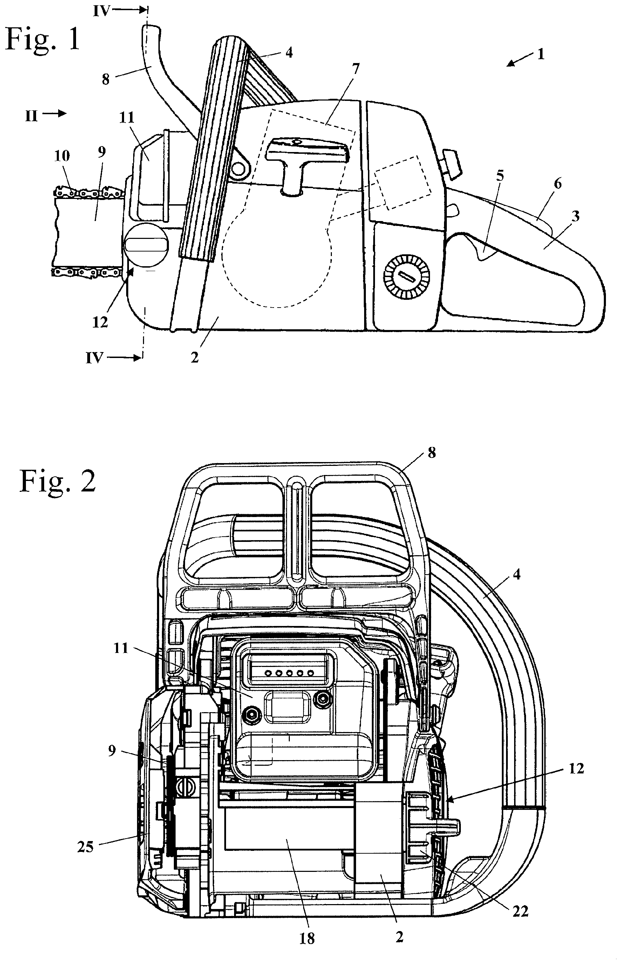

Fig. 1 zeigt als Ausführungsbeispiel eine handgeführte Motorsäge 1. Die Motorsäge 1 besitzt im Ausführungsbeispiel ein Gehäuse 2, an dem ein hinterer Handgriff 3 und ein Griffbügel 4 angeordnet sind. In dem Gehäuse 2 ist ein Antriebsmotor 7 zum Antrieb einer Sägekette 10 angeordnet. Die Sägekette 10 ist an einer Führungsschiene 9 umlaufend angeordnet. Die Führungsschiene 9 erstreckt sich an der dem hinteren Handgriff 3 abgewandten Seite des Gehäuses 2 nach vorn. Die Motorsäge 1 besitzt einen im Ausführungsbeispiel als Verbrennungsmotor ausgebildeten Antriebsmotor 7. Der Antriebsmotor 7 kann jedoch auch ein Elektromotor sein, dem Energie über ein Anschlusskabel oder einen Akku zugeführt wird. Die Motorsäge 1 kann auch als Hochentaster ausgebildet sein, bei dem ein Getriebegehäuse, an dem die Führungsschiene 9 gehalten ist, über einen Schaft mit dem Gehäuse, in dem der Antriebsmotor angeordnet ist, verbunden ist.

Im Ausführungsbeispiel sind am hinteren Handgriff 3 ein Gashebel 5 sowie eine Gashebelsperre 6 gelagert. An der der Führungsschiene 9 zugewandten Seite des Griffbügels 4 ist ein Handschutz 8 angeordnet, der vorteilhaft zum Auslösen einer Bremseinrichtung für die Sägekette 10 dient. Die Motorsäge 1 besitzt einen Abgasschalldämpfer 11, der an der dem hinteren Handgriff 3 abgewandten, der Führungsschiene 9 zugewandten Seite des Gehäuses 2 angeordnet ist. Durch den Abgasschalldämpfer entweichen die Abgase des Antriebsmotors 7 in die Umgebung. Am Gehäuse 2 ist außerdem eine Schmiervorrichtung 12 für die Sägekette 10 angeordnet.

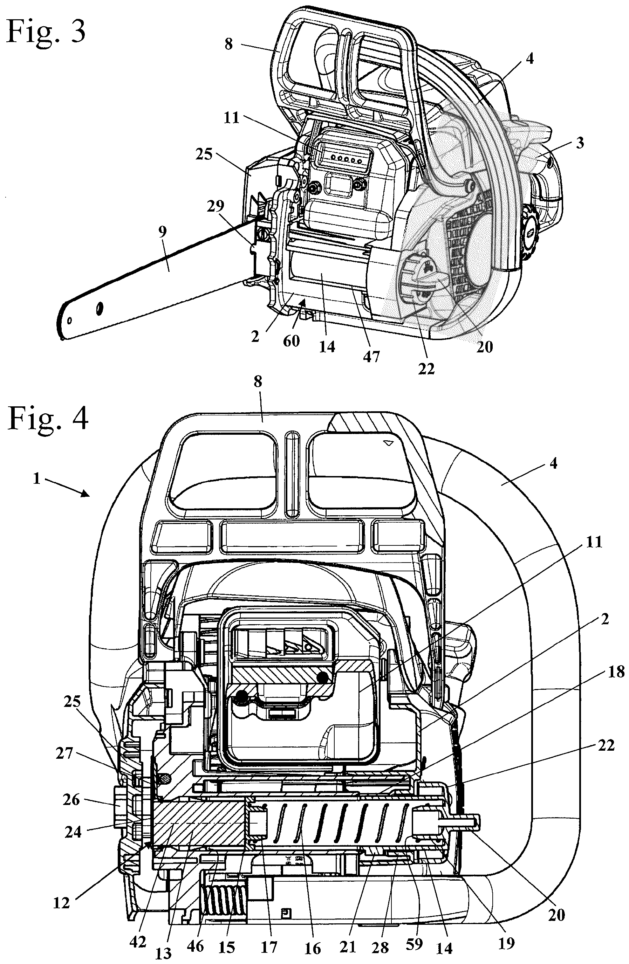

Wie Fig. 2 zeigt, besitzt die Schmiervorrichtung 12 einen Grundkörper 18, der im Ausführungsbeispiel zylindrisch ausgebildet ist. Die Führungsschiene 9 ist im Bereich des Gehäuses 2 von einem Kettenraddeckel 25 abgedeckt. An der der Führungsschiene 9 abgewandten Seite weist die Schmiervorrichtung 12 einen Deckelabschnitt 22 auf, der eine im Gehäuse 2 für die Schmiervorrichtung 12 ausgebildete Aufnahmeöffnung verschließt. Der Grundkörper 18 ist Teil einer in Fig. 3 gezeigten Halterung 14. Wie Fig. 3 zeigt, ist am Deckelabschnitt 22 ein Griffabschnitt 20 ausgebildet, an dem ein Bediener die Halterung 14 mit dem Deckelabschnitt 22 halten und am Gehäuse 2 festlegen oder vom Gehäuse 2 lösen kann. Wie Fig. 3 auch zeigt, besitzt das Gehäuse 2 eine Öffnung 47, die an einer dem hinteren Handgriff abgewandten Vorderseite 60 des Gehäuses 2 ausgebildet und durch die die Halterung 14 sichtbar ist.

Fig. 4 zeigt den Aufbau der Schmiervorrichtung 12 im Einzelnen. Der Grundkörper 18 weist einen nach außen ragenden Verriegelungszapfen 21 auf, der hinter einem Wandabschnitt 28 des Gehäuses 2 liegt und dadurch den Grundkörper 18 im Gehäuse 2 fixiert. Der Deckelabschnitt 22 besitzt einen in den Grundkörper 18 ragenden Stutzen 19, an dessen Außenumfang eine Feder 16 gehalten ist. Die Feder 16 ist als Schraubendruckfeder ausgebildet und liegt mit ihrem anderen Ende an einem Druckstück 15 an. Das Druckstück 15 weist einen Stutzen 17 auf, der in Richtung auf den Stutzen 19 ausgerichtet ist und der ins Innere der Feder 16 ragt und diese führt. Die Feder 16 spannt das Druckstück 15 in Richtung auf die Führungsscheine 9 (Fig. 3) vor. Die Stirnseite des Stutzens 19 bildet einen Endanschlag 59 für den Stutzen 17 des Druckstücks 15. Der Endanschlag 59 begrenzt die maximale Einschubtiefe des Druckstücks 15 in den Grundkörper 18. Am Grundkörper 18 ist ein Endanschlag 46 für das Druckstück 15 gebildet, gegen den das Druckstück 15 bei weitgehend aufgebrauchtem Schmierstoffstück 13 gedrückt wird. Der Endanschlag 46 verhindert, dass das Druckstück 15 von der Feder 16 aus dem Grundkörper 18 gedrückt werden kann.

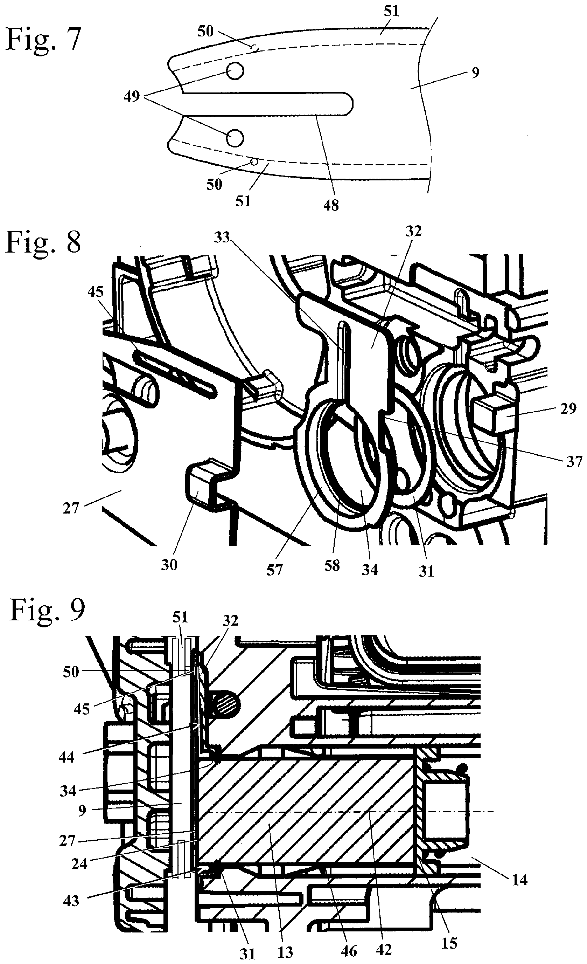

Wie Fig. 4 zeigt, ist im Grundkörper 18 der Halterung 14 ein Schmierstoffstück 13 angeordnet. Das Schmierstoffstück 13 liegt an der der Feder 16 abgewandten Seite des Druckstücks 15 am Druckstück 15 an und wird von der Feder 16 in Richtung auf eine Schmelzkammer 43 (Fig. 9) vorgespannt. Das Schmierstoffstück 13 besitzt eine Längsmittelachse 42, die mit einer Längsmittelachse des Grundkörpers 18 zusammenfällt. Das Schmierstoffstück 13 ist bei 20°C fest und kann beispielsweise mindestens teilweise aus einem Wachs bestehen. Das Schmierstoffstück 13 besitzt eine Stirnseite 24, die von der Feder 16 gegen ein Seitenblech 27 der Motorsäge 1 gedrückt wird. Zwischen dem Seitenblech 27 und dem Kettenraddeckel 25 ist die in Fig. 4 nicht gezeigte Führungsschiene 9 (Fig. 3) eingespannt. Der Kettenraddeckel 25 ist mit einer in Fig. 4 gezeigten Befestigungsmutter 26 am Gehäuse 2 fixiert und hält die Führungsschiene 9 am Gehäuse 2. Die Längsmittelachse des Schmierstoffstücks 13 verläuft senkrecht zur Ebene der Führungsschiene 9 und in Querrichtung der Motorsäge 1.

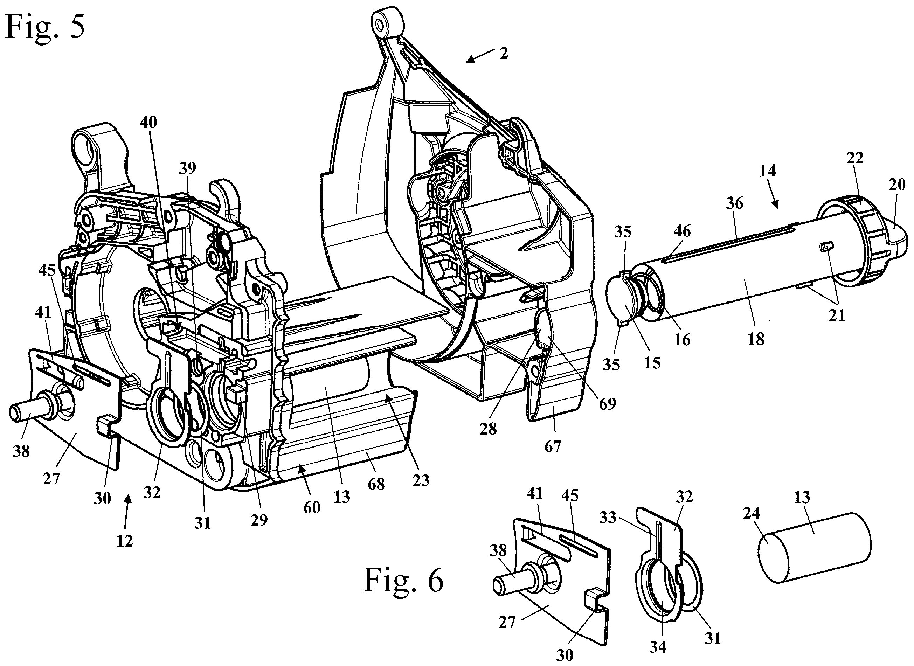

Fig. 5 zeigt den Aufbau der Schmiervorrichtung 12 im Einzelnen. Die Halterung 14 besitzt im Ausführungsbeispiel mehrere Verriegelungszapfen 21. Der Wandabschnitt 28 ist an einem Gehäuseteil 67 des Gehäuses 2 ausgebildet. Der Wandabschnitt 28 besitzt eine Stirnseite, hinter der die Verriegelungszapfen 21 zu liegen kommen. Der Wandabschnitt 28 besitzt eine von der zylindrischen Form abweichende Innenkontur, so dass die Verriegelungszapfen 21 durch die am Wandabschnitt 28 ausgebildete Öffnung 69 hindurchtreten können. Die Verriegelung hinter dem Wandabschnitt 28 erfolgt durch Drehen des Deckelabschnitts 22 mit dem Griffabschnitt 20. Der zylindrische Grundkörper 28 besitzt im Ausführungsbeispiel zwei einander gegenüberliegend angeordnete Längsnuten 36, von denen in Fig. 5 eine gezeigt ist. Das Druckstück 15 besitzt nach außen ragende Führungsnasen 35. Im Ausführungsbeispiel sind zwei Führungsnasen 35 vorgesehen, die jeweils in eine Längsnut 36 ragen. Das dem Deckelabschnitt 22 abgewandte Ende der Längsnuten 36 bildet jeweils einen Endanschlag 46 für das Druckstück 15. Ist kein Schmierstoffstück 13 in der Halterung 14 angeordnet, so drückt die Feder 16 das Druckstück 15 gegen die Endanschläge 46. Beim Nachfüllen eines neuen Schmierstoffstücks 13 kann das Druckstück 15 dadurch nicht von der Feder 16 aus dem Grundkörper 15 gedrückt werden.

Wie Fig. 5 auch zeigt, besitzt das Gehäuse 2 ein zweites Gehäuseteil 68, in dem eine Aufnahme 23 für die Halterung 14 ausgebildet ist. Die Aufnahme 23 ist zur Vorderseite 60 des Gehäuses 2 hin offen ausgebildet, so dass der Grundkörper 18 über einen Teil seines Umfangs von außen sichtbar ist. In der Halterung 14 ist das Schmierstoffstück 13 angeordnet, das in der Darstellung in Fig. 5 in der Aufnahme 23 gezeigt ist.

Wie Fig. 5 zeigt, besitzt das Gehäuseteil 68 an seiner dem Gehäuseteil 67 abgewandt liegenden Stirnseite eine Vertiefung 40, die zur Aufnahme einer nicht gezeigten Kettenspannvorrichtung dient. Das Seitenblech 27 besitzt eine Längsnut 41, durch die die Kettenspannvorrichtung auf die in Fig. 5 nicht gezeigte Führungsschiene 9 (Fig. 3) wirkt. Das Seitenblech 27 besitzt außerdem eine Durchtrittsöffnung 45, die ebenfalls als Längsnut ausgebildet ist und die zum Durchtritt von Schmierstoff zur Führungsschiene 9 dient. In Fig. 5 ist auch ein Gewindebolzen 38 gezeigt, der in eine Gewindeöffnung 39 des Gehäuses 2 eingeschraubt ist und auf dem die in Fig. 4 gezeigte Befestigungsmutter 26 fixiert wird. Zur Ausrichtung der Längsrichtung des Seitenblechs 27 und der Führungsschiene 9 dient eine Nase 29 am Gehäuse 2, die in eine Aufnahme 30 des Seitenblechs 27 ragt. Die Nase 29 ragt mit der Aufnahme 30 des Seitenblechs 27 in die Führungsschiene 9 (Fig. 3) und sichert dadurch die Lage der Führungsschiene 9.

Wie Fig. 5 zeigt, ist zwischen dem Gehäuseteil 68 und dem Seitenblech 27 ein Zwischenblech 32 vorgesehen. An der dem Seitenblech 27 abgewandten Seite des Zwischenblechs 32 ist eine Dichtung 31 angeordnet, die als ringförmige Scheibe ausgebildet ist.

Wie Fig. 6 zeigt, ragt die Stirnseite 24 des Schmierstoffstücks 13 zum Seitenblech 27. Dabei ragt das Schmierstoffstück 13 durch die Dichtung 31 und durch eine Öffnung 34 im Zwischenblech 32. Das Zwischenblech 32 besitzt an seiner dem Seitenblech 27 zugewandten Seite eine Vertiefung 33, die sich bis zur Durchtrittsöffnung 45 im Seitenblech 27 erstreckt. Die Vertiefung 33 bildet mit dem Seitenblech 27 einen Schmierstoffkanal 44, der in Fig. 9 gezeigt ist.

Wie Fig. 7 zeigt, besitzt die Führungsschiene 9 eine Langnut 48, die sich von einer Stirnseite der Führungsschiene 9 in Längsrichtung der Führungsschiene 9 erstreckt. Die Langnut 48 kann auch zu der dem Antriebsritzel zugewandten Seite geschlossen ausgebildet sein. In die Langnut 48 ragen der Gewindebolzen 38 und die Nase 29 mit der Aufnahme 30. Über die Langnut 48 ist die Lage der Führungsschiene 9 am Gehäuse 2 festgelegt. Die Führungsschiene 9 besitzt zwei Spannöffnungen 49, in die eine Kettenspannvorrichtung eingreifen kann. Die Führungsschiene 9 besitzt außerdem zwei Schmierstofföffnungen 50, die sich von der Außenseite der Führungsschiene 9 bis in eine Führungsnut 51 der Führungsschiene 9 erstrecken. In der Führungsnut 51 ist die Sägekette 10 (Fig. 1) geführt. Eine der Schmierstofföffnungen 50 liegt im Betrieb neben der Durchtrittsöffnung 45 des Seitenblechs 27 (Fig. 8). Die Schmierstofföffnungen 50 und die Spannöffnungen 49 sind so ausgebildet, dass die Führungsschiene 9 in zwei um ihre Längsachse gedrehten Lagen am Seitenblech 27 angeordnet werden kann, wobei jeweils eine der Schmierstofföffnungen 50 und eine der Spannöffnungen 49 zum Einsatz kommt.

Wie Fig. 8 zeigt, besitzt das Zwischenblech 32 am Außenumfang der Öffnung 34 einen zylindrischen Abschnitt 57, der sich von der Ebene des Zwischenblechs 32 zu der dem Seitenblech 27 abgewandten Seite erstreckt. An den zylindrischen Abschnitt 57 schließt sich ein nach innen ragender Rand 58 an, an dem die Dichtung 31 anliegt. Das Zwischenblech 32 besitzt eine Aussparung 37, in der die Nase 29 teilweise zu liegen kommt. Die Nase 29 legt damit auch die Lage des Zwischenblechs 32 fest.

Wie Fig. 9 zeigt, ist zwischen dem Zwischenblech 32 und dem Seitenblech 27 eine Schmelzkammer 43 gebildet, in die das Schmierstoffstück 13 ragt. Zu der der Halterung 14 zugewandten Seite ist die Schmelzkammer 43 von der Dichtung 31 abgedichtet. Die Öffnung 34, durch die das Schmierstoffstück 13 in die Schmelzkammer 43 eintritt, ist ebenso wie der Außenumfang des Schmierstoffstücks 13 rund ausgebildet. Wie Fig. 9 zeigt, ist der Innendurchmesser der Öffnung 34 nur geringfügig größer als der Außendurchmesser des Schmierstoffstücks 13. Dadurch, dass die Kontur des Schmierstoffstücks 13 an die Öffnung 34 angepasst ist, kann eine Dichtung 31 auch entfallen. Wie Fig. 9 zeigt, ist zwischen dem Zwischenblech 32 und dem Seitenblech 27 ein Schmierstoffkanal 44 gebildet, der durch die Vertiefung 33 des Zwischenblechs 32 (Fig. 8) begrenzt ist. Der Schmierstoffkanal 44 erstreckt sich zwischen dem Seitenblech 27 und dem Zwischenblech 32 durch die Durchtrittsöffnung 45 im Seitenblech 27 und die Schmierstofföffnung 50 in der Führungsschiene 9 bis in die Führungsnut 51.

Im Betrieb erwärmt sich die Führungsschiene 9 aufgrund der durch die Sägekette 10 hervorgerufene Reibung sehr stark. Diese Wärme wird auf das Seitenblech 27, das an der Führungsschiene 9 anliegt, übertragen. Das Seitenblech 27 dient als Wärmeleitelement und erwärmt die am Seitenblech 27 anliegende oder mit geringem Abstand benachbart zum Seitenblech 27 liegende Stirnseite 24 des Schmierstoffstücks 13, das dadurch aufgeschmolzen wird. Das Schmierstoffstück 13 besteht vorteilhaft mindestens teilweise aus Wachs oder Stearinwachs. Bevorzugt schmilzt das Schmierstoffstück 13 bei Temperaturen oberhalb von 40°C, insbesondere oberhalb von etwa 50°C. Es kann jedoch auch vorteilhaft sein, ein Schmierstoffstück einzusetzen, das erst bei Temperaturen oberhalb von etwa 70°C schmilzt. Dadurch kann sichergestellt werden, dass das Schmierstoffstück 13 bei den üblicherweise bei stillstehender Motorsäge 1 herrschenden Temperaturen selbst dann, wenn die Motorsäge 1 in der Sonne abgestellt wird, nicht schmilzt. Im Betrieb werden schnell hohe Temperaturen erreicht, die über das Seitenblech 27 zur Schmelzkammer 43 geleitet werden, so dass im Betrieb ein Aufschmelzen des Schmierstoffstücks 13 an seiner Stirnseite 24 sichergestellt ist. In der Schmelzkammer 43 ist dadurch flüssiger Schmierstoff angeordnet, der über den Schmierstoffkanal 44 in die Führungsnut 51 zugeführt wird. Wenn die Sägekette stillsteht, kühlen die Führungsschiene 9 und das Seitenblech 27 ab. Dadurch kann der Schmierstoff im Schmierstoffkanal 44 und in der Schmelzkammer 43 schnell erstarren. Dadurch, dass der Schmierstoffkanal 44 durch das Seitenblech 27 begrenzt ist, erstarrt der hier angeordnete Schmierstoff nach einem Stillstand der Sägekette 10 vergleichsweise rasch, so dass ein Austritt von Schmierstoff in die Umgebung weitgehend verhindert werden kann. Das Seitenblech 27 bildet damit ein Wärmeleitelement, das sich im Betrieb bei laufender Sägekette 10 schnell erwärmt und bei stillstehender Sägekette schnell abkühlt. Dadurch wird im Betrieb eine schnelle Förderung von Schmierstoff und bei stillstehender Sägekette eine schnelle Erstarrung des Schmierstoffs im Schmierstoffkanal 44 erreicht, so dass ein Austritt von Schmierstoff in die Umgebung weitgehend vermieden ist.

Um eine schnelle Erwärmung des in die Schmelzkammer 43 ragenden Bereichs des Schmierstoffstücks 13 zu erreichen, kann für das Wärmeleitelement, insbesondere das Seitenblech 27, ein gut wärmeleitendes Material wie beispielsweise Aluminium oder Stahl zum Einsatz kommen. Durch Anordnung, Gestaltung und Auswahl eines geeigneten Materials für das Wärmeleitelement lässt sich eine gewünschte Erwärmung der Schmelzkammer 43 gut einstellen. Das Schmierstoffstück 13 wird dabei nur in dem in die Schmelzkammer 43 ragenden Bereich geschmolzen. Dadurch ist ein vergleichsweise geringer Wärmeeintrag ausreichend, um eine gute Schmierung zu gewährleisten.

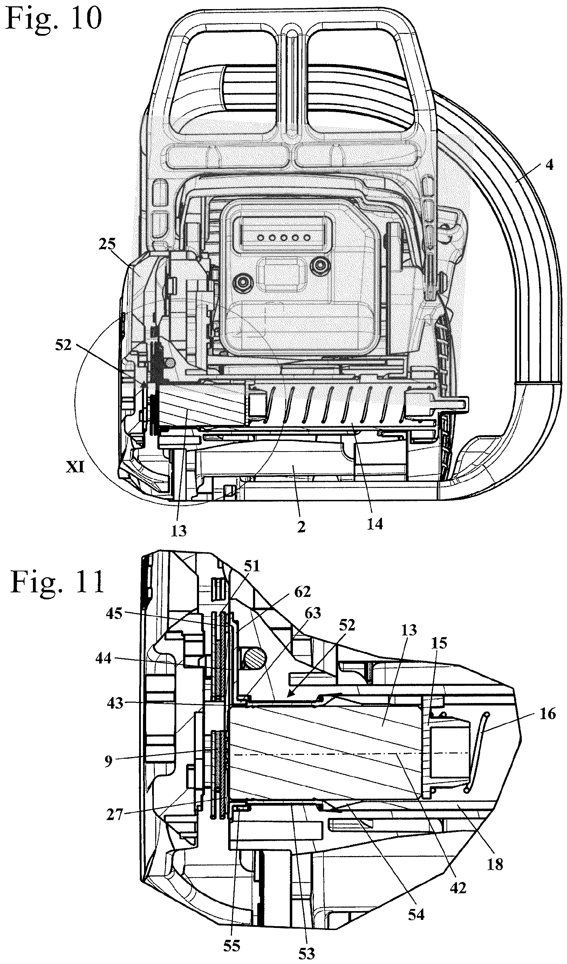

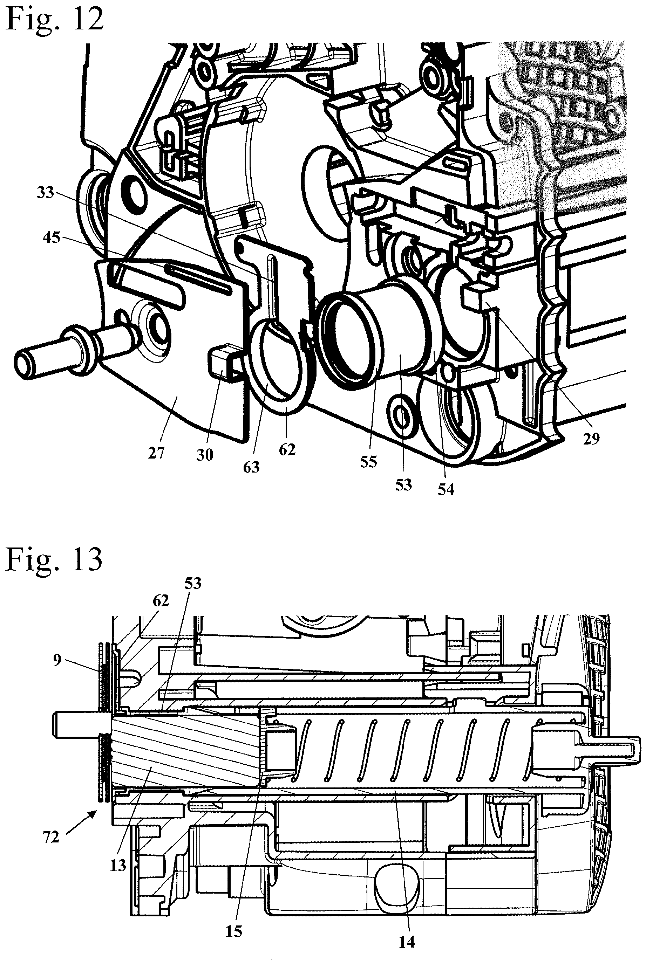

Fig. 10 zeigt ein Ausführungsbeispiel einer Schmiervorrichtung 52. Der Aufbau der Schmiervorrichtung 52 entspricht im Wesentlichen dem Aufbau der Schmiervorrichtung 12. Gleiche Bezugszeichen bezeichnen in allen Figuren einander entsprechende Elemente. Wie Fig. 11 zeigt, besitzt die Schmiervorrichtung 52 ein Zwischenblech 62, an dem eine Dichtung 53 anliegt. Die Dichtung 53 ist als zylindrischer Körper ausgebildet und erstreckt sich über mehrere Millimeter, im Ausführungsbeispiel über mehr als einen Zentimeter, in Richtung der Längsmittelachse 42 des Schmierstoffstücks 13 am Außenumfang des Schmierstoffstücks 13. Die Dichtung 53 ist vorteilhaft aus einem weichen, glatten Material, beispielsweise Silikon, gebildet und dichtet die Schmelzkammer 43 zu der dem Druckstück 15 und der Halterung 14 zugewandten Seite hin ab. Wie Fig. 11 zeigt, besitzt das Zwischenblech 62 einen Rand 63, der auch in Fig. 12 gezeigt ist und der von einem Rand 55 der Dichtung 53 übergriffen ist. An der dem Zwischenblech abgewandt liegenden Seite besitzt die Dichtung 53 einen Rand 54, der abgeschrägt ausgebildet ist und der in den Grundkörper 18 der Halterung 14 ragt. Die Gestaltung des Schmierstoffkanals 44 entspricht der Gestaltung der Schmiervorrichtung 52.

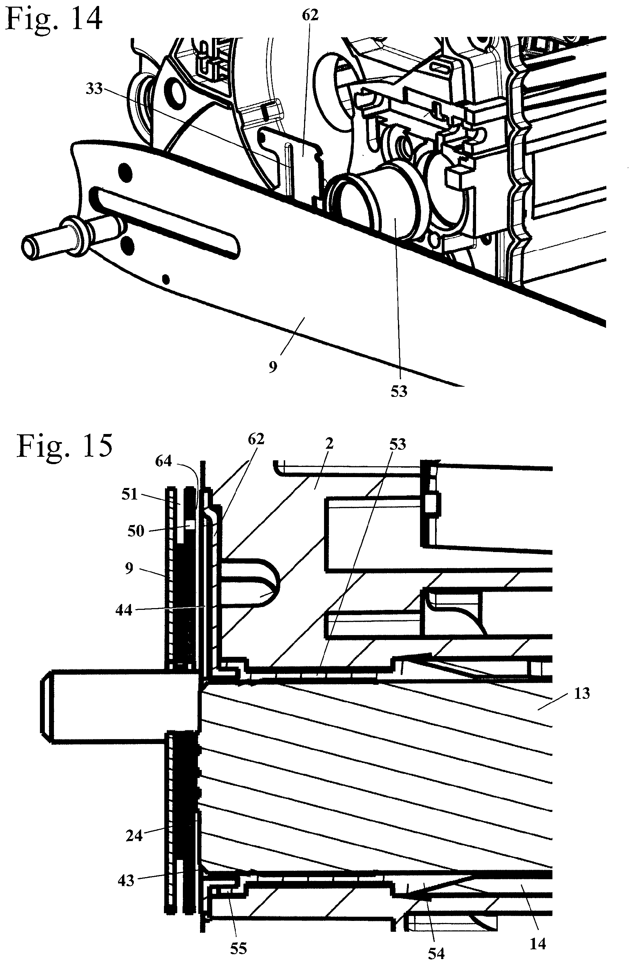

Die Figuren 13 bis 15 zeigen ein Ausführungsbeispiel einer Schmiervorrichtung 72, bei der das Zwischenblech 62 unmittelbar an der Führungsschiene 9 anliegt. In den Figuren 13 und 15 ist ein Abstand zwischen Führungsschiene 9 und Zwischenblech 62 gezeigt, um die Darstellung zu vereinfachen. Dieser Abstand entfällt vorteilhaft, so dass das Zwischenblech 62 an der Führungsschiene 9 anliegt. Wie Fig. 15 zeigt, ist die Schmelzkammer 43 von der Führungsschiene 9 und dem Zwischenblech 62 begrenzt. Hier bildet die Führungsschiene 9 das Wärmeleitelement, das die von der Sägekette 10 (Fig. 1) erzeugte Wärme zur Schmelzkammer 43 leitet und dadurch das Schmierstoffstück 13 erwärmt und verflüssigt. Die Stirnseite 24 des Schmierstoffstücks 13 ragt bis zur Führungsschiene 9 in die Schmelzkammer 43. Der Schmierstoffkanal 44 ist vom Zwischenblech 62 und der dem Gehäuse 2 zugewandten Flachseite 64 der Führungsschiene 9 begrenzt. Über die Schmierstofföffnung 50 in der Führungsschiene 9 tritt der Schmierstoff in die Führungsnut 51 über. Wie Fig. 15 auch zeigt, ist zwischen dem Zwischenblech 62 und der Halterung 14 eine Dichtung 53 angeordnet.

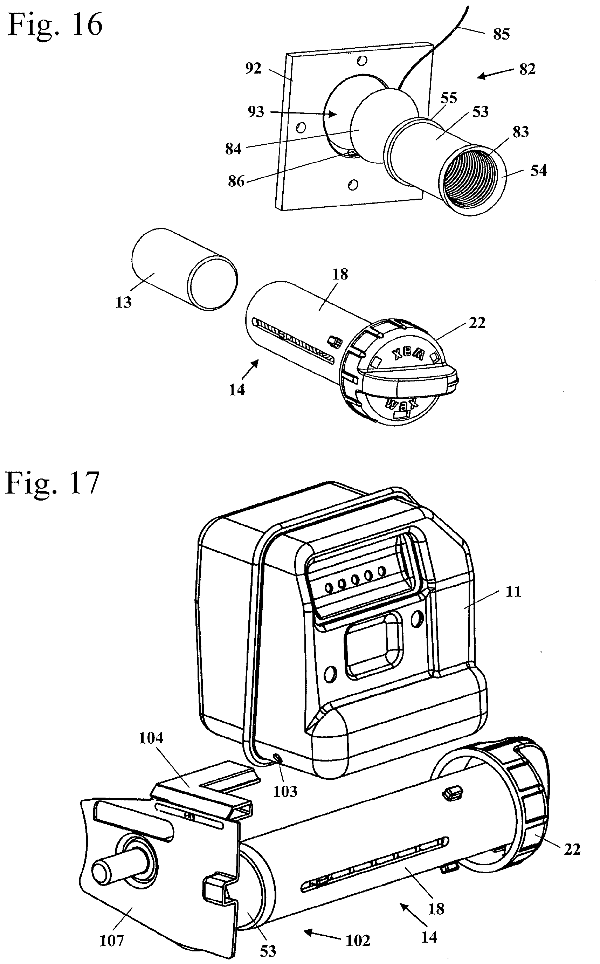

Bei dem in Fig. 16 gezeigten Ausführungsbeispiel ist eine Schmiervorrichtung 82 vorgesehen, die ein Heizelement 84 aufweist. Das Heizelement 84 begrenzt zusammen mit einem Zwischenblech 92 eine Schmelzkammer 93. Das Heizelement 84 weist ein Anschlusskabel 85 zur Verbindung mit einer elektrischen Energiequelle auf. Die elektrische Energiequelle kann beispielsweise ein von dem Antriebsmotor 7 angetriebener Generator sein. Auch die Zündeinrichtung eines als Verbrennungsmotor ausgebildeten Antriebsmotors 7 kann zur Energieversorgung des Heizelements 84 genutzt werden. Wie Fig. 16 zeigt, ist am Heizelement 84 die Dichtung 53 angeordnet, an der das Gehäuseteil 18 der Halterung 14 anliegt. Wie Fig. 16 zeigt, besitzt die Dichtung 53 im Ausführungsbeispiel an ihrer Innenseite eine Rippenstruktur 83, die vorteilhaft aus einer Vielzahl kreisförmiger, nach innen ragender Rippen besteht. Dadurch wird die Dichtwirkung verbessert. Wie Fig. 16 auch zeigt, besitzt das Zwischenblech 92 einen Schmierstoffkanal 86, der im Ausführungsbeispiel als Kanal im Zwischenblech 92 ausgebildet ist und der zu einer in Fig. 16 nicht gezeigten Schmierstofföffnung 50 in der Führungsschiene 9 führt.

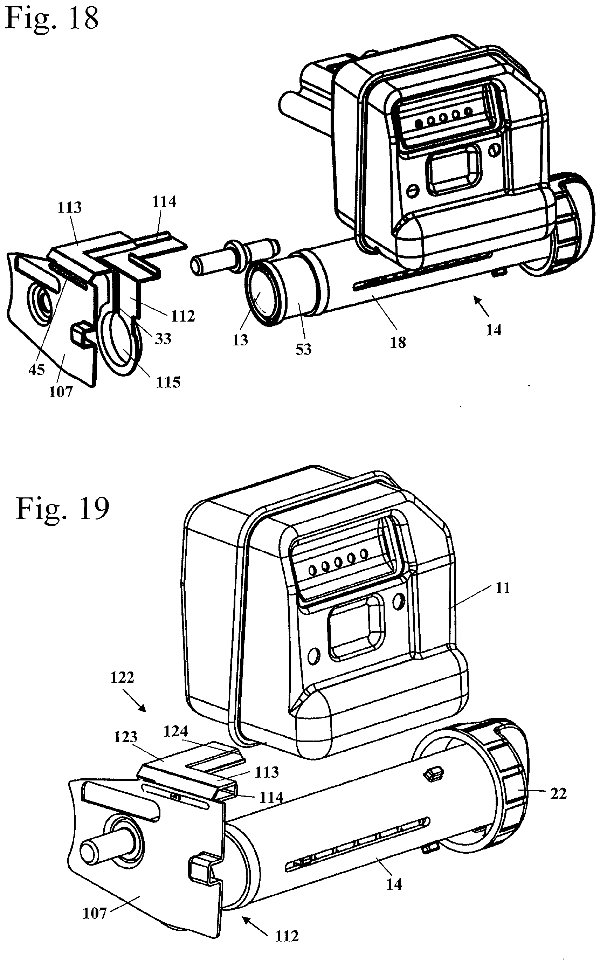

Bei dem in den Figuren 17 und 18 gezeigten Ausführungsbeispiel einer Schmiervorrichtung 102 ist vorgesehen, die Abgase des Verbrennungsmotors zur Erwärmung des Schmierstoffstücks 13 zu nutzen. Hierzu weist der Abgasschalldämpfer 11 eine Öffnung 103 auf, an die ein Abgaskanal 104 anschließt. Durch die im Abgaskanal 104 geführten Abgase wird ein Seitenblech 107 erhitzt, an dem ein in der Halterung 14 geführtes, in Fig. 18 gezeigtes Schmierstoffstück 13 anliegt. Das Schmierstoffstück 13 ist dabei durch eine Dichtung 53 geführt und ragt durch eine Öffnung 115 des Zwischenblechs 112 in eine vom Zwischenblech 112 und dem Seitenblech 107 begrenzte Schmelzkammer. Das Zwischenblech 112 besitzt eine Vertiefung 33, die zusammen mit dem Seitenblech 107 einen Schmierstoffkanal begrenzt, der durch eine Durchtrittsöffnung 45 des Seitenblechs 107 zur Führungsschiene 9 gelangt. Wie Fig. 18 zeigt, ist der Abgaskanal 104 durch eine erste Begrenzungswand 113 und eine zweite Begrenzungswand 114 gebildet. Die erste Begrenzungswand 114 ist im Ausführungsbeispiel am Seitenblech 107 angeformt und die zweite Begrenzungswand 114 am Zwischenblech 112. Dadurch wird auf einfache Weise eine gute Erwärmung von Seitenblech 107 und Zwischenblech 112 erreicht.

Bei dem in Fig. 19 gezeigten Ausführungsbeispiel ist eine Schmiervorrichtung 122 mit einem Wärmeleitelement 123 gezeigt. Das Wärmeleitelement 123 besitzt eine Anlagekontur 124 zur Anlage am Abgasschalldämpfer 11. Dadurch wird das Wärmeleitelement 123 vom Abgasschalldämpfer 11 und den im Abgasschalldämpfer 11 strömenden Abgasen erwärmt. Im Ausführungsbeispiel ist das Wärmeleitelement 123 aus einer ersten Begrenzungswand 113 und einer zweiten Begrenzungswand 114 aufgebaut. Wie bei der Schmiervorrichtung 102 ist die erste Begrenzungswand 113 am Seitenblech 107 angeformt und die zweite Begrenzungswand 114 an einem in Fig. 19 nicht gezeigten Zwischenblech 112. Auch eine andere Gestaltung des Wärmeleitelements 123 kann jedoch vorteilhaft sein. Anstatt eines einzigen Schmierstoffstücks 13 kann vorgesehen sein, mehrere Schmierstoffstücke zu verwenden. Beispielsweise kann als Schmierstoffstück eine Vielzahl von Kugeln aus Schmierstoff, beispielweise Wachs, vorgesehen sein. Dadurch kann die Halterung für die Schmierstoffstücke beispielsweise ein gebogener Kanal oder dgl. sein. Dadurch kann eine gute Ausnutzung des zur Verfügung stehenden Bauraums erreicht werden. Bei der Verwendung von mehreren beispielsweise kugelförmigen Schmierstoffstücken wird bevorzugt eine Dichtung am Eintritt in die Schmelzkammer angeordnet, die sich über mehrere der Schmierstoffstücke erstreckt, um eine gute Abdichtung sicherzustellen.

Es kann auch vorgesehen sein, dass die Schmelzkammer durch die Führungsschiene selbst begrenzt wird und in der Führungsschiene selbst der Schmierstoffkanal gebildet ist, der den Schmierstoff von der Schmelzkammer zur Führungsnut transportiert.

## Patentansprüche

1. Handgeführte Motorsäge mit einem Antriebsmotor (7), der eine an einer Führungsschiene (9) umlaufend angeordnete Sägekette (10) der Motorsäge antreibt, und mit einer Schmiervorrichtung (12, 52, 72, 82, 102, 122) für die Sägekette (10), wobei die Schmiervorrichtung (12, 52, 72, 82, 102, 122) mindestens ein bei 20°C festes Schmierstoffstück (13) umfasst,
**dadurch gekennzeichnet, dass** die Motorsäge eine Schmelzkammer (43, 93) umfasst, in die das Schmierstoffstück (13) ragt und die über mindestens einen Schmierstoffkanal (44, 86) mit der Sägekette (10) verbunden ist, und dass die Schmelzkammer (43, 93) mindestens teilweise von einem Wärmeleitelement begrenzt ist, das im Betrieb der Motorsäge erhitzt wird.

2. Motorsäge nach Anspruch 1,
**dadurch gekennzeichnet, dass** das Wärmeleitelement mit mindestens einer Wärmequelle des Arbeitsgeräts in Verbindung steht.

3. Motorsäge nach Anspruch 2,
**dadurch gekennzeichnet, dass** die Wärmequelle die Sägekette (10) der Motorsäge ist.

4. Motorsägenach einem der Ansprüche 1 bis 3,
**dadurch gekennzeichnet, dass** das Schmierstoffstück (13) von einer Vorspanneinrichtung in Richtung auf die Schmelzkammer (43, 93) gedrückt wird.

5. Motorsäge nach einem der Ansprüche 1 bis 4,
**dadurch gekennzeichnet, dass** das Schmierstoffstück (13) durch eine Öffnung (34, 115) in die Schmelzkammer (43, 93) eintritt, wobei die Kontur der Öffnung (34, 115) an die Außenkontur des Schmierstoffstücks (13) angepasst ist.

6. Motorsäge nach Anspruch 5,
**dadurch gekennzeichnet, dass** an der Öffnung (34, 115) eine Dichteinrichtung angeordnet ist, durch die das Schmierstoffstück (13) in die Schmelzkammer (43, 93) eintritt.

7. Motorsäge nach einem der Ansprüche 1 bis 6,
**dadurch gekennzeichnet, dass** die Motorsäge eine Halterung (14) für das Schmierstoffstück (13) aufweist, wobei die Halterung (14) an einem Gehäuse (2) der Motorsäge abnehmbar gehalten ist.

8. Motorsäge nach Anspruch 7,
**dadurch gekennzeichnet, dass** die Halterung (14) einen rohrförmigen Grundkörper (18) umfasst, der in einer Aufnahme (23) des Gehäuses (2) der Motorsäge angeordnet ist.

9. Motorsäge nach Anspruch 8,
**dadurch gekennzeichnet, dass** die Aufnahme (23) über einen Teil des Umfangs des Grundkörpers (18) zur Umgebung hin offen ist.

10. Motorsäge nach einem der Ansprüche 7 bis 9,
**dadurch gekennzeichnet, dass** die Halterung (14) ein Druckstück (15) umfasst, das an der der Schmelzkammer (43, 93) abgewandten Seite an dem Schmierstoffstück (13) anliegt und das in Richtung auf die Schmelzkammer (43, 93) vorgespannt ist, wobei die Halterung (14) vorteilhaft mindestens einen Endanschlag (46, 59) für das Druckstück (15) aufweist.

11. Motorsäge nach einem der Ansprüche 1 bis 10,
**dadurch gekennzeichnet, dass** die Führungsschiene (9) an einem Seitenblech (27, 107) der Motorsäge (1) anliegt und wobei das Seitenblech (27, 107) das Wärmeleitelement bildet.

12. Motorsäge nach Anspruch 11,
**dadurch gekennzeichnet, dass** der Schmierstoffkanal (44) von dem Seitenblech (27, 107) und einem an dem Seitenblech (27, 107) anliegenden Zwischenblech (32, 62, 112) begrenzt ist, wobei in dem Zwischenblech (32, 62, 112) vorteilhaft eine den Schmierstoffkanal (44) begrenzende Vertiefung (33) vorgesehen ist, die sich bis zu einer Durchtrittsöffnung (45) im Seitenblech (27, 107) erstreckt.

13. Motorsäge nach Anspruch 11 oder 12,
**dadurch gekennzeichnet, dass** das Schmierstoffstück (13) eine Längsmittelachse (42) besitzt, die etwa senkrecht zur Ebene der Führungsschiene (9) angeordnet ist.

14. Motorsäge nach einem der Ansprüche 1 bis 13,
**dadurch gekennzeichnet, dass** das Wärmeleitelement von einer von dem Antriebsmotor betriebenen Heizeinrichtung erwärmt wird.

15. Motorsäge nach einem der Ansprüche 1 bis 14,
**dadurch gekennzeichnet, dass** der Antriebsmotor (7) ein Verbrennungsmotor mit einem Abgasschalldämpfer (11) ist und das Wärmeleitelement von dem Abgasschalldämpfer (11) und/oder aus dem Abgasschalldämpfer (11) austretenden Abgasen erwärmt wird.

## Claims

1. Hand-held power saw having a drive motor (7), which drives a saw chain (10), arranged so as to circulate on a guide bar (9) of the power saw, and having a lubricating apparatus (12, 52, 72, 82, 102, 122) for the saw chain (10), wherein the lubricating apparatus (12, 52, 72, 82, 102, 122) comprises at least one lubricant piece (13) that is solid at 20°C, **characterized in that** the power saw comprises a melting chamber (43, 93) into which the lubricant piece (13) projects and which is connected to the saw chain (10) via at least one lubricant channel (44, 86), and **in that** the melting chamber (43, 93) is bounded at least partially by a heat conducting element, which is heated during operation of the power saw.

2. Power saw according to Claim 1,
**characterized in that** the heat conducting element is connected to at least one heat source of the work apparatus.

3. Power saw according to Claim 2,
**characterized in that** the heat source is the saw chain (10) of the power saw.

4. Power saw according to one of Claims 1 to 3,
**characterized in that** the lubricant piece (13) is pushed in the direction of the melting chamber (43, 93) by a preloading device.

5. Power saw according to one of Claims 1 to 4,
**characterized in that** the lubricant piece (13) enters the melting chamber (43, 93) through an opening (34, 115), wherein the contour of the opening (34, 115) matches the external contour of the lubricant piece (13).

6. Power saw according to Claim 5,
**characterized in that** a sealing device, through which the lubricant piece (13) enters the melting chamber (43, 93), is arranged at the opening (34, 115).

7. Power saw according to one of Claims 1 to 6,
**characterized in that** the power saw has a holder (14) for the lubricant piece (13), wherein the holder (14) is held in a removable manner on a housing (2) of the power saw.

8. Power saw according to Claim 7,
**characterized in that** the holder (14) comprises a tubular main body (18) which is arranged in a receptacle (23) of the housing (2) of the power saw.

9. Power saw according to Claim 8,
**characterized in that** the receptacle (23) is open towards the environment around a part of the periphery of the main body (18).

10. Power saw according to one of Claims 7 to 9,
**characterized in that** the holder (14) comprises a pressure piece (15) which bears on the lubricant piece (13) on the side remote from the melting chamber (43, 93) and which is preloaded in the direction of the melting chamber (43, 93), wherein the holder (14) advantageously has at least one end stop (46, 59) for the pressure piece (15).

11. Power saw according to one of Claims 1 to 10,
**characterized in that** the guide bar (9) bears on a side plate (27, 107) of the power saw (1), and wherein the side plate (27, 107) forms the heat conducting element.

12. Power saw according to Claim 11,
**characterized in that** the lubricant channel (44) is bounded by the side plate (27, 107) and an intermediate plate (32, 62, 112) bearing on the side plate (27, 107), wherein a recess (33) that bounds the lubricant channel (44) and extends as far as a through-opening (45) in the side plate (27, 107) is advantageously provided in the intermediate plate (32, 62, 112).

13. Power saw according to Claim 11 or 12,
**characterized in that** the lubricant piece (13) has a longitudinal centre axis (42) which is arranged approximately perpendicularly to the plane of the guide bar (9).

14. Power saw according to one of Claims 1 to 13,
**characterized in that** the heat conducting element is heated by a heating device operated by the drive motor.

15. Power saw according to one of Claims 1 to 14,
**characterized in that** the drive motor (7) is a combustion engine having an exhaust muffler (11) and the heat conducting element is heated by the exhaust muffler (11) and/or exhaust gases emerging from the exhaust muffler (11).

## Revendications

1. Scie à moteur à main munie d'un moteur d'entraînement (7), qui entraîne une chaîne de sciage (10), agencée autour d'un rail de guidage (9), de la scie à moteur, et munie d'un dispositif de lubrification (12, 52, 72, 82, 102, 122) pour la chaîne de sciage (10), le dispositif de lubrification (12, 52, 72, 82, 102, 122) comportant une pièce de lubrifiant solide à 20 °C (13), **caractérisée en ce que** la scie à moteur comporte une chambre de fusion (43, 93), dans laquelle la pièce de lubrifiant (13) se dresse et qui est reliée par l'intermédiaire d'au moins un canal de lubrifiant (44, 86) avec la chaîne de sciage (10), et **en ce que** la chambre de fusion (43, 93) est au moins partiellement délimitée par un élément conducteur de chaleur, qui est chauffé pendant l'exploitation de la scie à moteur.

2. Scie à moteur selon la revendication 1, **caractérisée en ce que** l'élément conducteur de chaleur est en liaison avec au moins une source de chaleur de l'appareil de travail.

3. Scie à moteur selon la revendication 2, **caractérisée en ce que** la source de chaleur est la chaîne de sciage (10) de la scie à moteur.

4. Scie à moteur selon l'une quelconque des revendications 1 à 3, **caractérisée en ce que** la pièce de lubrifiant (13) est pressée par un appareil de précontrainte en direction de la chambre de fusion (43, 93).

5. Scie à moteur selon l'une quelconque des revendications 1 à 4, **caractérisée en ce que** la pièce de lubrifiant (13) entre à travers une ouverture (34, 115) dans la chambre de fusion (43, 93), le contour de l'ouverture (34, 115) étant adapté au contour extérieur de la pièce de lubrifiant (13).

6. Scie à moteur selon la revendication 5, **caractérisée en ce qu'**un appareil d'étanchéité est agencé au niveau de l'ouverture (34, 115), à travers lequel la pièce de lubrifiant (13) entre dans la chambre de fusion (43, 93).

7. Scie à moteur selon l'une quelconque des revendications 1 à 6, **caractérisée en ce que** la scie à moteur comprend un support (14) pour la pièce de lubrifiant (13), le support (14) étant supporté de manière détachable sur un boîtier (2) de la scie à moteur.

8. Scie à moteur selon la revendication 7, **caractérisée en ce que** le support (14) comporte un corps de base de forme tubulaire (18), qui est agencé dans un logement (23) du boîtier (2) de la scie à moteur.

9. Scie à moteur selon la revendication 8, **caractérisée en ce que** le logement (23) est ouvert vers l'environnement sur une partie de la périphérie du corps de base (18).

10. Scie à moteur selon l'une quelconque des revendications 7 à 9, **caractérisée en ce que** le support (14) comporte une pièce de pression (15), qui s'applique contre la pièce de lubrifiant (13) sur le côté détourné de la chambre de fusion (43, 93) et qui est précontrainte en direction de la chambre de fusion (43, 93), le support (14) comprenant avantageusement au moins une butée d'extrémité (46, 59) pour la pièce de pression (15).

11. Scie à moteur selon l'une quelconque des revendications 1 à 10, **caractérisée en ce que** le rail de guidage (9) s'applique contre une tôle latérale (27, 107) de la scie à moteur (1) et dans laquelle la tôle latérale (27, 107) forme l'élément conducteur de chaleur.

12. Scie à moteur selon la revendication 11, **caractérisée en ce que** le canal de lubrifiant (44) est délimité par la tôle latérale (27, 107) et une tôle intermédiaire (32, 62, 112) s'appliquant contre la tôle latérale (27, 107), un creux (33) délimitant le canal de lubrifiant (44) étant avantageusement prévu dans la tôle intermédiaire (32, 62, 112), qui s'étend jusqu'à une ouverture de passage (45) dans la tôle latérale (27, 107).

13. Scie à moteur selon la revendication 11 ou 12, **caractérisée en ce que** la pièce de lubrifiant (13) présente un axe médian longitudinal (42), qui est agencé approximativement perpendiculairement au plan du rail de guidage (9).

14. Scie à moteur selon l'une quelconque des revendications 1 à 13, **caractérisée en ce que** l'élément conducteur de chaleur est chauffé par un appareil de chauffage exploité par le moteur d'entraînement.

15. Scie à moteur selon l'une quelconque des revendications 1 à 14, **caractérisée en ce que** le moteur d'entraînement (7) est un moteur à combustion muni d'un silencieux de gaz d'échappement (11) et l'élément conducteur de chaleur est chauffé par le silencieux de gaz d'échappement (11) et/ou par des gaz d'échappement sortant du silencieux de gaz d'échappement (11).
